# EUROPÄISCHE PATENTANMELDUNG

(11) **EP 1 319 385 A2**
(43) Veröffentlichungstag der Anmeldung: **18.06.2003**
(21) Anmeldenummer: 02450281.7
(22) Anmeldetag: 16.12.2002
(51) Int. Cl.: A61J 1/14

(54) **Behältnis für Blut und Blut-produkte**

(30) Priorität: 14.12.2001 AT 19662001
(71) Anmelder: Rötzer, Birgit, 2325 Himberg (AT)
(72) Erfinder: Rötzer, Birgit, 2325 Himberg (AT)
(74) Vertreter: Hehenberger, Reinhard, Dipl.-Ing., Patentanwalt

(57) **Zusammenfassung**

Ein Behältnis für Blut oder Blutprodukte weist eine äußere Umhüllung (22) auf, die einen Aufnahmeraum (23) für das Blut oder das Blutprodukt umgibt. Innerhalb der äußeren Umhüllung (22) befindet sich wenigstens ein gegenüber dem Aufnahmeraum (23) abgedichteter Raum (3), der zur Aufnahme eines Temperaturmessfühlers (6) dient. Dadurch kann die Kerntemperatur des Blutes im Behältnis gemessen werden.

## Beschreibung

Die Erfindung betrifft ein Behältnis für Blut oder Blutprodukte mit einer äußeren Umhüllung, die einen Aufnahmeraum für das Blut oder das Blutprodukt umgibt.

Unter Blutprodukte oder "Blutderivate" werden im Rahmen der vorliegenden Erfindung insbesondere solche Produkte verstanden, die zur Anwendung am Menschen oder Tier vorgesehen sind oder als Ausgangsstoffe für Arzneimittel zur Anwendung am Menschen oder Tier dienen. Unter anderem handelt es sich dabei um zelluläre Komponenten (Erythrozyten, Thrombozyten, Granulozyten) und Plasma, das unfraktioniert am Menschen oder Tier angewendet wird, sowie Stammzellenpräparate. Wenn im Folgenden von Blut gesprochen wird, ist dies auch als Bezugnahme auf die erwähnten Blutprodukte oder Blutderivate zu verstehen.

Bei Blut fehlt es gegenwärtig an einer zuverlässigen Dokumentation bezüglich deren Temperaturverlauf von der Abnahme am Menschen oder Tier über den nachfolgenden Transport und die Lagerung bis zu ihrer Weiterverwendung.

Der Erfindung liegt daher die Aufgabe zu Grunde, Voraussetzungen für die lückenlose Dokumentation des Temperaturverlaufs des Bluts zu schaffen.

Gelöst wird diese Aufgabe erfindungsgemäß durch ein Behältnis mit den Merkmalen des Anspruches 1.

Voraussetzung für die erwähnte lückenlose Dokumentation ist eine zuverlässige Erfassung der Temperatur des Blutes, vorzugsweise der Kerntemperatur im Zentrum des Behältnisses. Dabei ist zu gewährleisten, dass es weder zu einer Verunreinigung des Blutes noch zu einem Austritt von Blut und somit einer Gefährdung der Umwelt, insbesondere von Mensch oder Tier, kommt. Ermöglicht wird dies durch den gegenüber dem Aufnahmeraum für das Blut abgedichteten Raum, in dem der Temperaturmessfühler anzuordnen ist.

Gemäß einer bevorzugten Ausführungsform der Erfindung ist vorgesehen, dass der Raum über einen Kanal von außen zugänglich ist sowie des weiteren, dass sich durch den Kanal eine Messleitung zum Raum erstreckt.

Über diese Messleitung kann der Temperaturmessfühler mit einem Gerät mit einer Anzeige und/oder einem Speicher für die vom Temperaturmessfühler, vorzugsweise über einen längeren Zeitraum, aufgenommenen Temperatur verbunden werden.

Ein derartiges Gerät kann beispielsweise die Größe einer herkömmlichen Chipkarte aufweisen, wobei im Chip die aufgenommenen Temperaturdaten gespeichert werden. Wenn dieses Gerät mit einer Anzeige versehen ist, dann kann entweder die aktuelle Temperatur oder ein Teil oder der gesamte bisher aufgenommene Temperaturverlauf angezeigt werden. Zusätzlich oder alternativ kann das Gerät über Anschlusskontakte verfügen, über welche die gespeicherten Daten ausgelesen werden können. Beispielsweise kann zum Auslesen der Daten ein Lesegerät verwendet werden, in welches das Gerät beispielsweise in Form einer Chipkarte hineingesteckt wird und die Daten dann automatisch ausgelesen und bei Bedarf weiterverarbeitet werden.

Um eine lückenlose und sichere Dokumentation zu gewährleisten ist sicherzustellen, dass einerseits der Temperaturmessfühler nicht aus dem Behältnis entnommen und anderseits das Gerät zum Anzeigen und Speichern der vom Temperaturmessfühler aufgenommenen Daten nicht vom Temperaturmessfühler getrennt wird. Um dies zu gewährleisten, können entsprechend den jeweiligen Anforderungen und gesetzlichen Bestimmungen unterschiedlich sichere Maßnahmen vorgesehen sein.

Eine sehr sichere Ausführungsform ist jene, bei der die Messleitung vom Kanal eng umgeben und vorzugsweise in den Kanal eingeschweißt ist, in Kombination damit, dass die Messleitung mit dem Gerät untrennbar verbunden ist. Bei dieser Ausführungsform ist zwar gewährleistet, dass das Messgerät weder absichtlich noch unabsichtlich vom Behältnis und insbesondere vom Temperaturmessfühler getrennt werden kann, allerdings handelt es sich dabei auch um eine relativ teure Ausführungsform, da auch das Messgerät nicht ohne weiteres wiederverwendet werden kann.

Bei etwas geringeren Anforderungen an die Sicherheit kann beispielsweise ein Stecker vorgesehen sein, mit dem die Messleitung mit dem Gerät verbindbar ist. Auch bei dieser Ausführungsform ist es praktisch unmöglich, das Gerät unbemerkt vom Behältnis zu trennen, da es bei einer Unterbrechung der Messleitung durch Auseinanderziehen des Steckers zu einer vom Gerät ohne weiteres zu erfassenden und zu speichernden Unterbrechung der vom Temperaturmessfühler erfassten und an das Gerät übertragenen Messdaten kommt, die Unterbrechung sich somit anhand des gespeicherten Messprotokolls feststellen lässt.

Weitere Möglichkeiten bestehen beispielsweise dadurch, dass die Messleitung mit Widerhaken oder dergleichen ausgestattet ist, und beispielsweise dadurch, dass der Kanal über eine von der Messleitung zu durchdringende Membran verschlossen ist, die vorzugsweise im Anschlussbereich des Kanals an die äußere Umhüllung angeordnet ist. Bei dieser Ausführungsform, bei der die Messleitung wieder untrennbar mit dem Gerät verbunden sein kann, ist es möglich eine beispielsweise vorübergehende Trennung von Messgerät samt Messleitung und Temperaturmessfühler vom Behältnis dadurch zu erkennen, dass die Membran durch Herausreißen der Messleitung mit den Widerhaken zerstört oder beschädigt wurde. Ein Austauschen von Messgerät und Behältnis kann überdies ohne weiteres dadurch verhindert werden, dass eine Identifikationsnummer am Behältnis im Gerät gespeichert und dem Messprotokoll zugeordnet wird.

Weitere bevorzugte Ausführungsform der Erfindung sind Gegenstand der übrigen Unteransprüche.

Nachfolgend werden bevorzugt Ausführungsformen der Erfindung unter Bezugnahme auf Zeichnungen näher beschrieben.

Es zeigt:
Fig. 1 eine Ausführungsform der Erfindung in Form eines Blutbeutels, der mit einem Gerät zum Speichern und Anzeigen der erfassten Temperatur verbunden ist und
Fig. 2 ein Detail der Ausführungsform von Fig. 1 im Bereich einer Membran in vergrößertem Maßstab.

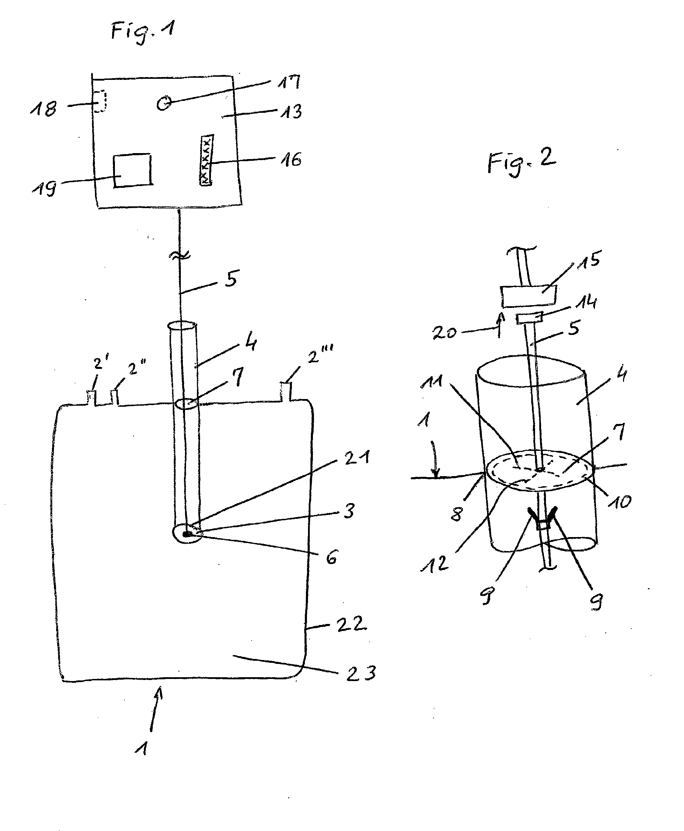

In Fig. 1 ist ein an sich bekannter Blutbeutel 1 dargestellt und die eine äußere Umhüllung 22 aufweist, die einen Aufnahmeraum 23 für das Blut oder Blutprodukt aufweist, mit Anschlüssen 2', 2" und 2"' ausgestattet ist. Darüber hinaus ist der Beutel 1 mit einem Raum 3 ausgestattet, der über einen Kanal 4 mit der Umgebung verbunden ist. Der Kanal 4 kann dabei etwa den gleichen Durchmesser aufweisen wie der Raum 3, aber auch enger sein. Durch den Kanal 4 erstreckt sich eine Messleitung 5, an deren Ende ein Temperaturmessfühler 6 angeordnet, der im Raum 3 aufgenommen ist. Um zu verhindern, dass die Messleitung 5 mit dem Temperaturmessfühler 6 absichtlich oder unabsichtlich aus dem Kanal 4 herausgezogen wird, ist in der in den Fig. 1 und 2 dargestellten Ausführungsform eine Membran 7 vorgesehen, die im Anschlussbereich 8 des Kanals 4 an die äußere Umhüllung 1 im Kanal 4 befestigt ist. Diese Membran wird von der Messleitung 5 durchdrungen. An der Messleitung 5 sind Widerhaken 9 befestigt, welche verhindern, dass die Messleitung 5 von der in Fig. 2 dargestellten Stellung wieder durch die Membran 7 in Richtung des Pfeiles 20 wieder herausgezogen wird, ohne dass die Membran 7 oder die Widerhaken 9 beschädigt werden.

Die Membran 7 ist im in Fig. 2 dargestellten Ausführungsbeispiel mit einer ringförmigen Sollbruchstelle 10 sowie mit zwei einander in der Mitte der Membran 7 kreuzenden Sollbruchstellen 11 und 12 ausgestattet. In der Praxis können auch eine oder zwei der drei Sollbruchstellen 10 bis 12 weggelassen werden und somit beispielsweise nur die ringförmige Sollbruchstelle 10 oder eine oder beide der Sollbruchstellen 11 und 12 vorhanden sein. Da die Membran 7 entweder an der Sollbruchstelle 10 herausgerissen oder die Sollbruchstellen 11 oder 12 aufgebrochen wird, wenn die Messleitung 5 mit den Widerhaken 9 in Richtung des Pfeiles 20 herausgerissen wird, ist bei der Endabnahme des Behältnisses ohne weiteres eine Trennung von Temperaturmessfühler 6 und Behältnis 1 zu erkennen.

Die Messleitung 5 ist mit einem Gerät 13 verbunden, wobei diese Verbindung entweder untrennbar oder mittels Steckerpaaren 14, 15 trennbar ausgeführt sein kann. Das Gerät 13 dient im dargestellten Ausführungsbeispiel zum Speichern und Anzeigen des Verlaufes der Temperatur, die vom Temperaturmessfühler 6 aufgenommen wurde. Zum Anzeigen, beispielsweise der Momentantemperatur, aber auch des Temperaturverlaufes, kann eine herkömmliche LCD-Anzeige 16 verwendet werden, zum Speichern der Daten ein herkömmlicher Chip 17, ähnlich oder in der Art solcher Chips, wie sie beispielsweise bei Chipkarten eingesetzt werden. Die Daten können dann auf herkömmliche Art und Weise direkt vom Chip ausgelesen werden. Alternativ kann auch ein im Gerät 13 aufgenommener Chip oder ein anderer geeigneter Speicher verwendet werden und die Daten beispielsweise über einen Anschluss 18 ausgelesen werden. Zusätzlich kann am Gerät 13 auch ein Tastenfeld 19 für die Eingabe von Daten, beispielsweise eine Identifikationsnummer des Blutbeutels, und die Steuerung der Anzeige der gespeicherten Daten vorgesehen sein.

Um eine möglichst exakte bzw. rasche Messung der Temperatur des Blutes bzw. der Blutprodukte zu ermöglichen kann vorgesehen sein, dass der Raum 36 beispielsweise durch eine weitere Membran 21 vom Kanal 4 getrennt und mit einem gut wärmeleitenden Fluid, beispielsweise einem Wärmeleitgel, gefüllt ist. Grundsätzlich ist es auch möglich, mehr als einen Raum 6 vorzusehen, wobei jeder einzelne Raum dann über einen eigenen Kanal 4 zugänglich sein kann. Es ist aber auch möglich, einen einzigen Kanal 4, z.B. Y-förmig oder sternförmig, zu den einzelnen Räumen zu verzweigen und die Messleitungen über diesen verzweigten Kanal in die Räume zu verzweigen.

Anstatt eines Kanals 4 mit einem relativ groß dimensionierten Querschnitt kann auch vorgesehen sein, dass die Messleitung 5 in einen Kanal eingelegt ist, der die Messleitung 5 eng umgibt, die Messleitung 5 in den Kanal 4 sozusagen "eingeschweißt" ist. Bei dieser Ausführungsform wird auf zuverlässige Weise verhindert, dass die Messleitung 5 mit dem Temperaturmessfühler 6 aus dem Behältnis 1 herausgezogen wird. Der Nachteil bei dieser Ausführungsform ist, dass die Messleitung 5 mit dem Temperaturmessfühler 6 nicht wiederverwendbar ist und mit dem Beutel 1 nach Gebrauch entsorgt werden muss.

Mit Hilfe der Erfindung können sämtliche Temperaturschwankungen des Blutes oder Blutproduktes vom Einfüllen in den Beutel 1 bis zur Entnahme aus dem Beutel 1 erfasst werden, was einen erheblichen Fortschritt in der Qualitätssicherung der entsprechenden Produkte mit sich bringt. Des weiteren ist durch den vom Blutaufnahmeraum 23 getrennten Aufnahmeraum 6 einschließlich des Kanales 4, in welchem der Temperaturmessfühler 6 und die Messleitung 5 aufgenommen sind, gewährleistet, dass es weder zu einer Verunreinigung oder Beeinträchtigung des im Behältnis 1 aufgenommenen Produktes noch zu einer Gefährdung der Umwelt durch aus dem Beutel 1 austretende Produkte kommen kann. Durch die permanente Temperaturerfassung und Protokollierung wird es des weiteren möglich, dass Hersteller längere Haltbarkeiten der gelagerten Produkte garantieren können, wogegen durch den zusätzlichen technischen Aufwand gemäß der Erfindung vergleichsweise geringen Kosten anfallen.

## Patentansprüche

1. Behältnis für Blut oder Blutprodukte mit einer äußeren Umhüllung (22), die einen Aufnahmeraum (23) für das Blut oder das Blutprodukt umgibt, **dadurch gekennzeichnet, dass** sich innerhalb der äußeren Umhüllung (22) wenigstens ein gegenüber dem Aufnahmeraum (23) abgedichteter Raum (3) befindet, der zur Aufnahme eines Temperaturmessfühlers (6) dient.

2. Behältnis nach Anspruch 1, **dadurch gekennzeichnet, dass** sich der Raum (3) etwa in der Mitte des Aufnahmeraumes (23) befindet.

3. Behältnis nach Anspruch 1 oder 2, **dadurch gekennzeichnet, dass** der Raum (3) über einen Kanal (4) von außen zugänglich ist.

4. Behältnis nach Anspruch 3, **dadurch gekennzeichnet, dass** sich durch den Kanal (4) eine Messleitung (5) zum Raum (3) erstreckt.

5. Behältnis nach einem der Ansprüche 1 bis 4, **dadurch gekennzeichnet, dass** der Raum (3) wenigstens in dem Bereich, in dem der Temperaturmessfühler (6) angeordnet ist, mit einem Fluid gefüllt ist, das ein gutes Wärmeleitvermögen aufweist.

6. Behältnis nach einem der Ansprüche 3 bis 5, **dadurch gekennzeichnet, dass** der Kanal (4) über eine von einer Messleitung (5) zu durchdringende Membran (7,21) verschlossen ist, die vorzugsweise im Anschlussbereich (8) des Kanals (4) an die äußere Umhüllung angeordnet ist.

7. Behältnis nach Anspruch 6, **dadurch gekennzeichnet, dass** die Membran (7) eine Sollbruchstelle (10,11,12) aufweist.

8. Behältnis nach Anspruch 7, **dadurch gekennzeichnet, dass** die Sollbruchstelle (10) ringförmig ausgebildet und im Randbereich der Membran (7) angeordnet ist.

9. Behältnis nach Anspruch 7, **dadurch gekennzeichnet, dass** die Sollbruchstelle (11,12) linien- oder kreuzförmig ausgebildet ist und von der Messleitung (5) durchdrungen ist.

10. Behältnis nach einem der Ansprüche 4 bis 9, **dadurch gekennzeichnet, dass** die Messleitung (5) mit Widerhaken (9) oder dergleichen ausgestattet ist.

11. Behältnis nach einem der Ansprüche 4 bis 9, **dadurch gekennzeichnet, dass** die Messleitung (5) vom Kanal (4) eng umgeben und vorzugsweise in den Kanal (4) eingeschweißt ist.

12. Behältnis nach einem der Ansprüche 4 bis 11, **dadurch gekennzeichnet, dass** die Messleitung (5) mit einem Gerät (13) mit einer Anzeige(16) und/oder einem Speicher (17) für die vom Temperaturmessfühler (6) vorzugsweise über einen längeren Zeitraum aufgenommene Temperatur verbunden ist.

13. Behältnis nach Anspruch 12, **dadurch gekennzeichnet, dass** die Messleitung (5) mit dem Gerät (13) untrennbar verbunden ist.

14. Behältnis nach Anspruch 12, **gekennzeichnet durch** einen Stecker (14,15), mit dem die Messleitung (5) mit dem Gerät (13) verbindbar ist.

15. Behältnis nach einem der Ansprüche 12 bis 14, **dadurch gekennzeichnet, dass** das Gerät (13) über Anschlusskontakte (18) verfügt, über welche die gespeicherten Daten ausgelesen werden können.

16. Behältnis nach einem der Ansprüche 1 bis 15, **dadurch gekennzeichnet, dass** es ein Blutbeutel ist.

17. Behältnis nach Anspruch 1 oder 2, **dadurch gekennzeichnet, dass** der Raum (3) verschlossen und der Temperaturmessfühler (6) mit einem drahtlosen Sender und einer Energiequelle ausgestattet ist.
